# FASCICULE DE BREVET EUROPEEN

(11) **EP 1 365 991 B1**
(45) Date de publication et mention de la délivrance du brevet: **08.09.2004**
(21) Numéro de dépôt: 02711731.6
(22) Date de dépôt: 21.02.2002
(51) Int. Cl.: C01B 31/02, H01B 9/04

(54) **PROCEDE POUR FORMER UN REVETEMENT, CONSTITUE DE NANOTUBES DE CARBONE, SUR LA SURFACE D'UN SUBSTRAT**
VERFAHREN ZUR BILDUNG EINER KOHLENSTOFFNANORÖHREN ENTHALTENDEN BESCHICHTUNG AUF EINEM SUBSTRAT
METHOD FOR FORMING A COATING FILM, CONSISTING OF CARBON NANOTUBES, ON THE SURFACE OF A SUBSTRATE

(30) Priorité: 26.02.2001 CH 342012001
(43) Date de publication de la demande: 03.12.2003
(73) Titulaire: Nanolight International Ltd., 1247 Anières (CH)
(72) Inventeur: CROCI, Mirko, CH-1580 Avenches (CH); BONARD, Jean-Marc, CH-1004 Lausanne (CH)
(74) Mandataire: Kovacs, Paul
(86) Numéro de dépôt international: PCT/CH2002/000102
(87) Numéro de publication internationale: WO 2002/068323

(56) Documents cités:
- EP-A- 0 989 579
- EP-A- 1 126 494
- WO-A-01/23303
- WO-A-01/85612
- SHI-CHENG CHEN ET AL: "Effect of catalyst on growth behavior of carbon nanotube synthesizing by microwave heating thermal chemical vapor deposition process" 13TH INTERNATIONAL VACUUM MICROELECTRONICS CONFERENCE, GUANGHOU, CHINA, 14-17 AUG. 2000, vol. 19, no. 3, pages 1026-1029, XP002200491 Journal of Vacuum Science & Technology B (Microelectronics and Nanometer Structures), May-June 2001, AIP for American Vacuum Soc, USA ISSN: 0734-211X
- BONARD J -M ET AL: "Field emission from cylindrical carbon nanotube cathodes: Possibilities for luminescent tubes" APPLIED PHYSICS LETTERS, 30 APRIL 2001, AIP, USA, vol. 78, no. 18, pages 2775-2777, XP002200560 ISSN: 0003-6951
- QIN L C ET AL: "GROWING CARBON NANOTUBES BY MICROWAVE PLASMA-ENHANCED CHEMICAL VAPOR DEPOSITION" APPLIED PHYSICS LETTERS, AMERICAN INSTITUTE OF PHYSICS. NEW YORK, US, vol. 72, no. 26, 29 juin 1998 (1998-06-29), pages 3437-3439, XP000771159 ISSN: 0003-6951
- XU X ET AL: "A METHOD FOR FABRICATING LARGE-AREA, PATTERNED, CARBON NANOTUBE FIELD EMITTERS" APPLIED PHYSICS LETTERS, AMERICAN INSTITUTE OF PHYSICS. NEW YORK, US, vol. 74, no. 17, 26 avril 1999 (1999-04-26), pages 2549-2551, XP000829942 ISSN: 0003-6951

## Description

La présent invention a pour objet un procédé pour former, sur la surface d'un substrat, un revêtement constitué de nanotubes de carbone, selon lequel on met cette surface en contact avec une atmosphère gazeuse, contenant au moins un composé de carbone, susceptible de former une structure de nanotubes de carbone, par décomposition thermique au contact avec ledit substrat, et croissance de nanotubes de carbone à partir de la surface de celui-ci, et l'on maintient ladite surface à une température appropriée à cette décomposition thermique, pendant un temps suffisant pour permettre un degré de croissance désiré des nanotubes de carbone.

L'utilisation de nanotubes de carbone, c'est-à-dire de filaments tubulaires de carbone pur, à l'état cristallisé sous forme graphitique ayant une longueur de l'ordre de 1 à 100 micromètres et un diamètre de l'ordre de 0,01 à 0,1 micromètres (soit 10 à 100 nanomètres), présente un intérêt croissant en vue de la réalisation de sources émettrices d'électrons appropriées à l'emploi dans divers appareils scientifiques et industriels.

Par exemple, de telles sources émettrices d'électrons peuvent être avantageusement utilisées, au lieu d'émetteurs thermoélectroniques, dans des jauges à vide , notamment de type Bayard-Alpert ou encore dans des appareils détecteurs de champ magnétique, des éléments ionisants pour la spectrométrie de masse, des appareils amplificateurs de micro-ondes, et des éléments photoluminescents utilisant la conversion de lumière ultraviolette en lumière visible par une substance luminophore (matériau photoluminescent), dans lesquels la lumière UV est obtenue par bombardement électronique d'une atmosphère gazeuse renfermant de l'azote ou un composé d'azote, de manière à provoquer l'excitation de l'azote.

Il est récemment apparu particulièrement avantageux d'utiliser une source émettrice d'électrons, comprenant un revêtement, constitué d'une pluralité de nanotubes de carbone, appliqués sur la surface d'un substrat conducteur électrique et adhérant sur cette surface en formant un film émetteur de champ, comme cathode émettrice d'électrons, fonctionnant sur le principe connu d'émission froide d'électrons (émission de champ par effet tunnel), pour la réalisation d'un tube d'éclairage luminescent destiné à remplacer les tubes fluorescents usuels et présentant sur ces derniers l'avantage de permettre d'éviter l'emploi de mercure dans l'atmosphère intérieure du tube.

Plus précisément, un tube luminescent de ce type comprend, outre ladite source d'électrons, une enceinte transparente ou translucide avantageusement réalisée en verre ayant de préférence une forme sphérique ou cylindrique sur la surface de laquelle est appliquée une couche de matière conductrice électrique, par exemple une couche métallique d'épaisseur assez faible pour assurer une bonne transparence de ce revêtement, elle-même recouverte d'une couche de matière électroluminescente ayant la propriété d'émettre de la lumière sous l'effet d'une excitation par un faisceau d'électrons. Le substrat supportant la source émettrice d'électrons est avantageusement disposé dans la partie centrale de l'enceinte, par exemple dans l'axe du tube dans le cas où l'enceinte est constituée par un tube cylindrique.

En vue de l'obtention d'une densité élevée d'émetteurs d'électrons, constituant le film émetteur de champ, ce qui constitue une condition nécessaire pour une irradiation uniforme et intense de la matière électroluminescente, il a récemment été proposé de former, sur la surface du substrat, le revêtement de nanotubes de carbone par décomposition chimique en phase vapeur à haute température d'une atmosphère gazeuse essentiellement constituée d'au moins un composé carboné approprié, tel que le monoxyde de carbone ou un hydrocarbure.

Conformément à un tel procédé, on réalise la décomposition d'un composé carboné ou d'un mélange de composés carbonés à l'état gazeux, dans une enceinte réactionnelle appropriée, par exemple constitué par un tube de quartz placé à l'intérieur d'un four permettant d'obtenir une température élevée, par exemple de l'ordre de 700 à 800°C, nécessaire pour provoquer cette décomposition, et la croissance des nanotubes de carbone sur la surface du support placé dans l'enceinte réactionnelle. Ce support est avantageusement constitué par un fil métallique préalablement revêtu d'une couche d'une matière ayant un effet catalytique sur les réactions de décomposition dudit composé et la croissance des nanotubes de carbone.

Un tel procédé permet de réaliser un film émetteur de champ de bonne qualité mais il présente néanmoins divers inconvénients en ce qui concerne son utilisation en vue de la fabrication d'un tube d'éclairage luminescent.

En particulier, pour l'obtention d'un film émetteur de champ ayant des propriétés uniformes sur la totalité de sa surface, il est nécessaire de soumettre toute la longueur du support à un chauffage également uniforme. Ceci implique l'utilisation d'installations de chauffage, telles que des fours tubulaires, dont le coût augmente en fonction de la longueur du substrat et peut devenir prohibitif dans le cas de la fabrication industrielle de tubes luminescents ayant une longueur de l'ordre d'un mètre.

D'autre part, après l'étape de formation du film émetteur de champ sur la cathode, il faut monter celle-ci en position axiale à l'intérieur de l'enceinte du tube luminescent. Pour cela, il faut réaliser une fixation mécanique solide ainsi que des contacts électriques adéquats, par exemple par soudage. Ces manipulations sont difficiles à réaliser et impliquent un important risque d'endommager les structures émettrices d'électrons et la couche de matière électroluminescente et, ainsi, de dégrader l'uniformité et la stabilité de l'émission d'électrons et de la lumière produite par la matière électroluminescente.

La présente invention a pour objet de remédier aux inconvénients qui viennent d'être mentionnés.

A cet effet, le procédé selon l'invention est caractérisé en ce que l'on soumet la partie de la surface du substrat destinée à recevoir le revêtement à un chauffage direct, par un moyen distinct d'éventuels moyens de chauffage de ladite atmosphère gazeuse.

Ainsi le procédé conforme à l'invention présente l'avantage de permettre la réalisation de la cathode émettrice d'électrons pour un tube luminescent en effectuant le dépôt du revêtement de nanotubes de carbone constituant le film émetteur de champ, sur la surface du substrat, après assemblage complet de ce dernier dans l'enceinte du tube luminescent, dont la paroi est déjà munie, sur sa surface intérieure, de la couche de matière électroluminescente, juste avant le scellage final et la mise sous vide du tube.

Il en résulte que ce procédé est parfaitement adapté à la fabrication industrielle de tubes fluorescents.

En outre, de façon tout à fait inattendue, le procédé selon l'invention présente, par rapport au procédé antérieurement connu, mentionné plus haut, selon lequel on porte l'atmosphère réactionnelle gazeuse, dans son ensemble, par des moyens de chauffage tels qu'un four tubulaire, à la température permettant la décomposition du composé carboné et la croissance des nanotubes de carbone, l'avantage que les nanotubes de carbone croissent avec leurs axes orientés perpendiculairement à la surface du substrat, ce qui leur confère un très haut degré d'alignement ainsi qu'un espacement régulier, alors que les nanotubes obtenus par ledit procédé antérieur ont une direction de croissance essentiellement aléatoire.

La différence de structure ainsi obtenue se traduit par l'obtention d'une amélioration importante de l'homogénéité de l'émission des électrons ainsi qu'un abaissement de la tension de fonctionnement pour une cathode émettrice d'électrons obtenue par le procédé selon l'invention par rapport à une cathode obtenue par le procédé antérieur. On comprendra que l'invention permet ainsi une importante amélioration de la qualité d'un tube luminescent muni d'une telle cathode.

Comme matériau constitutif du substrat, on peut avantageusement utiliser toute matière métallique (par exemple le molybdène, le fer, le nickel ou encore des alliages de ces éléments entre eux ou avec d'autres éléments, notamment l'acier, un alliage de nickel chrome, un alliage de fer, aluminium et chrome, tel que celui commercialisé sous la dénomination "Kanthal"), ou bien une matière semi-conductrice (par exemple du silicium fortement dopé). On peut en outre éventuellement utiliser un verre spécial conducteur de l'électricité.

Le substrat peut avoir toute forme appropriée à l'utilisation envisagée pour la cathode émettrice d'électrons. Par exemple, le substrat peut être plan, notamment sous forme d'une plaquette, ou non planaire, en particulier sous forme d'un fil, d'un barreau, d'une sphère ou d'une demi sphère. Bien que l'on utilise, de préférence, un substrat rectiligne, celui-ci peut également être conformé en spirale ou constituer une bobine, ou encore être constitué par une pièce mécanique telle qu'une vis.

Avantageusement, on revêt la surface du substrat, préalablement à la formation du revêtement de nanotubes de carbone, d'une ou de plusieurs couches d'au moins une substance ayant un effet catalytique sur la décomposition du composé carboné et/ou la croissance des nanotubes de carbone.

Une telle substance catalytique peut par exemple consister en un sel de fer, nickel ou cobalt (par exemple l'un des sels suivants: Fe(NO₃)₃.9H₂O; Ni(NO₃)₂.6H₂O; Co(NO₃)₂.6H₂O) ou un mélange de tels sels. On peut notamment employer une solution de tels sels ou mélanges de sels dans un solvant approprié tel que l'éthanol, par exemple avec une solution ayant une concentration en sel de l'ordre de 50mM. Lorsque l'on utilise une telle solution catalytique, l'application de la substance catalytique sur la surface du substrat peut être effectuée par simple immersion de courte durée du substrat dans un bain de solution ou encore par impression de cette surface au moyen d'un tampon plastique ou par nébulisation. On peut ainsi obtenir un film de catalyseur qui peut être continu sur toute la surface du substrat ou encore être structuré sous forme de plages séparées en vue de permettre la croissance sélective des nanotubes de carbone sur une partie seulement de cette surface.

Outre l'utilisation mentionnée plus haut, d'une solution catalytique, on peut effectuer une application de catalyseur sur la surface du substrat de toute autre manière appropriée, notamment par une méthode de déposition dite "electro-less", évaporation par faisceau d'électrons, pulvérisation cathodique, etc.

En variante, la substance catalytique peut ne pas être nécessaire ou bien être contenue dans la matière même du substrat, ce qui est par exemple le cas lorsque le substrat est en un métal de transition tel que le fer, le nickel ou le cobalt, ou un alliage contenant un tel métal. En particulier, l'utilisation d'un alliage nickel chrome de formule Ni₈₀ Cr₂₀ permet d'obtenir un effet catalytique du substrat lui-même.

Afin d'obtenir une amélioration du résultat de l'application de la matière catalytique sur le substrat, par exemple une meilleure adhérence de la matière déposée sur la surface du substrat, il peut être avantageux de soumettre cette surface à un traitement de préparation préalable à cette application. Ainsi, par exemple, un tel traitement de surface peut être effectué par oxydation de cette surface dans l'air ou l'oxygène à température supérieure à 150°C, ou encore par chauffage dans une atmosphère réductrice, également réalisé de préférence à une température supérieure à 150°C, ou par tout autre technique appropriée telle qu'un traitement dans un plasma électrique, une attaque chimique ou tout autre genre de traitement de surface notamment, au moyen d'un acide ou d'une base, ou encore un traitement d'électro-polissage.

On peut aussi déposer sur la surface du support, avant l'application du catalyseur, une couche de matière favorisant l'adhésion de ce dernier, par exemple une couche de titane.

Avant l'opération proprement dite de formation du revêtement de nanotubes de carbone sur le substrat, il peut être avantageux de soumettre ce dernier à un traitement destiné à améliorer l'adhésivité de ce revêtement sur le substrat. Un tel traitement peut, par exemple, consister en un recuit sous vide ou encore sous un flux d'un gaz tel que l'azote, l'hydrogène, l'oxygène, l'ammoniaque ou encore un mélange de gaz, notamment un mélange d'hydrogène et d'azote.

Comme composé de carbone susceptible d'être décomposé en donnant lieu à la formation des nanotubes de carbone, on peut, avantageusement utiliser, par exemple, du monoxyde de carbone ou encore un hydrocarbure tel que l'acétylène, le méthane, l'éthylène, le butane, le benzène, ou un mélange de tels composés. Il peut être avantageux d'utiliser un gaz de dilution tel que l'hydrogène, l'ammoniac ou l'azote.

La pression sous laquelle on effectue ladite opération est avantageusement comprise entre 10⁻⁵ et 10.10³ millibars, de préférence entre 10⁻³ et 200 millibars.

La croissance des nanotubes peut être effectuée sous flux de gaz ou bien sous atmosphère statique.

Avantageusement, la température du substrat est maintenue dans le domaine de 300°C à 1.500°C, pendant la formation des nanotubes.

Pour le chauffage du substrat, on peut procéder de toute manière appropriée. De préférence, on effectue ce chauffage par effet Joule, en faisant passer un courant électrique dans le matériau constitutif du substrat lui-même. Cependant, on peut également utiliser un support de substrat chauffant ou encore un filament de chauffage placé en contact avec le substrat ou au voisinage de celui-ci ou encore disposé dans la masse du substrat.

Après formation et croissance des nanotubes, il peut être avantageux d'effectuer un traitement permettant d'améliorer les propriétés de revêtement, notamment d'augmenter l'adhésivité des nanotubes sur la surface du substrat. Un tel traitement peut, par exemple, consister en un recuit, sous vide ou dans l'air, ou dans une atmosphère formée d'un autre gaz ou d'un mélange gazeux approprié, du substrat, revêtu par le revêtement de nanotubes de carbone. Avantageusement la limite inférieure du domaine de température approprié pour un tel traitement est de l'ordre de 150°C.

On va maintenant décrire, en détail, la mise en oeuvre du procédé selon l'invention, à titre d'exemple non limitatif, en se référent au dessin annexé dans lequel :
La Figure 1 est une vue schématique, en perspective éclatée, avec une partie en coupe, d'une partie d'un tube luminescent muni d'une cathode émettrice d'électrons par émission de champ;
La Figure 2 représente une micrographie par microscopie électronique à balayage, montrant la structure d'un revêtement de nanotubes de carbone obtenu par le procédé selon l'invention;
La Figure 3 représente une micrographie par microscopie électronique à balayage, montrant la structure d'un revêtement de nanotubes de carbone obtenu par un procédé de décomposition chimique à haute température conforme à l'art antérieur;
La Figure 4 est une coupe schématique d'un dispositif expérimental pour la formation d'un revêtement de nanotubes de carbone, par le procédé selon l'invention, selon un premier mode de mise en oeuvre de ce procédé;
La Figure 5 est une coupe schématique d'un dispositif expérimental pour la formation d'un revêtement de nanotubes de carbone, par le procédé selon l'invention, selon un deuxième mode de mise en oeuvre du procédé; et
La Figure 6 est un diagramme montrant une courbe caractéristique de la variation de l'intensité du courant d'émission de champ, mesuré pendant la croissance des nanotubes de carbone, lors de la mise en oeuvre du procédé selon l'invention selon le mode utilisant le dispositif illustré à la Figure 5.
La Figure 7 est un diagramme montrant les courbes caractéristiques de la variation de l'intensité du courant d'émission de champ, en fonction de la différence de potentiel appliquée entre la cathode et l'anode, dans un tube luminescent comprenant une cathode fabriquée par application d'un procédé de formation d'un revêtement de nanotubes de carbone, respectivement selon l'invention et conformément à l'art antérieur.

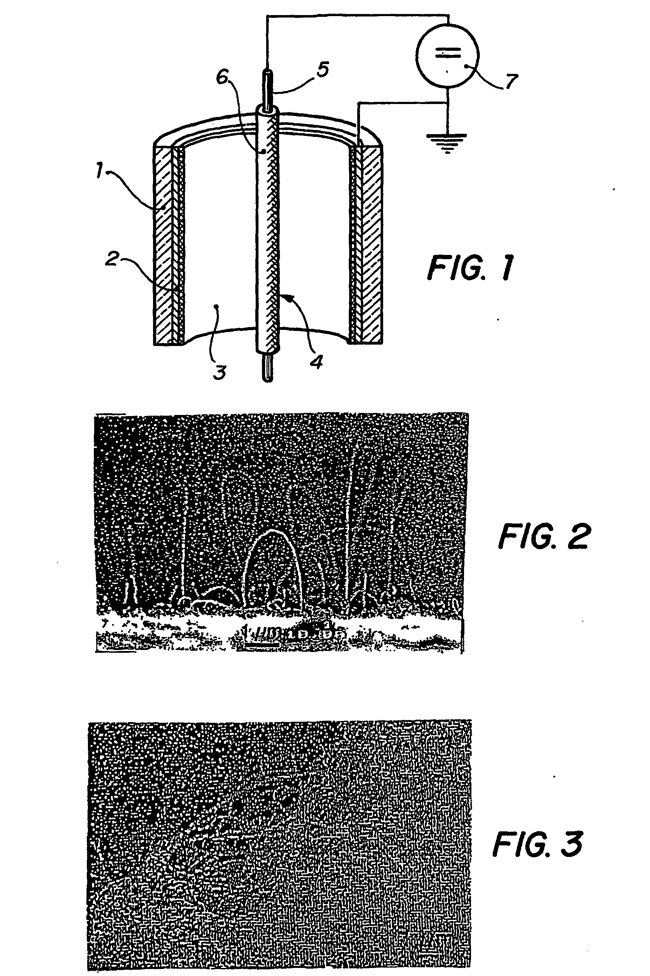

Le tube luminescent partiellement représenté à la Fig. 1 comprend un tube cylindrique 1, en verre, dont l'intérieur délimite une enceinte à vide. Le tube 1 est fermé de manière étanche à ses deux extrémités (non représentées) de façon à permettre de maintenir l'intérieur de l'enceinte sous un vide suffisamment poussé, de l'ordre de 10⁻⁶ millibars, pour le fonctionnement du tube luminescent. La paroi intérieure du tube 1 est revêtue d'une couche transparente 2 d'un matériau conducteur électrique tel que l'oxyde d'indium et d'étain (désigné par la dénomination "ITO" ou "ATO"), elle-même recouverte d'une couche 3 de matériau électroluminescent, tel que le produit désigné par la dénomination commerciale "Lumilux B 45" de la Société Riedel de Haehn, de composition Y₂O₂S: Tb.

Une cathode 4 émettrice d'électrons par effet de champ, constitué par une fil métallique 5, par exemple un fil de "Kanthal" de 0,3 mm de diamètre, revêtu sur toute sa surface par une couche 6 de nanotubes de carbone, est disposée au centre du tube 1, parallèlement à l'axe de celui-ci.

Une source 7 de courant continu à haute tension, par exemple 1,5 kV, est connectée entre le fil métallique 5 de la cathode 4 et la couche 2 de matériau conducteur de manière à permettre de provoquer l'émission d'électrons par la cathode 4, afin de produire l'émission de lumière visible par excitation de la couche 3 de matière électroluminescente.

Comme on le voit à la Fig. 2, les nanotubes de carbone, obtenus par le procédé selon l'invention, ont un très haut degré d'alignement, résultant de leur croissance essentiellement dans la direction perpendiculaire à la surface du substrat, ainsi qu'un espacement régulier.

En comparaison, les nanotubes de carbone obtenus par le procédé de déposition chimique en phase vapeur, à partir d'une atmosphère gazeuse à haute température, ont des directions de croissance orientées de manière aléatoire, comme cela apparaît clairement d'après la Fig. 3.

Ces différences dans la structure des revêtements obtenus, respectivement par le procédé selon l'invention, (Fig. 2) et par le procédé de l'art antérieur (Fig. 3) se traduisent par l'obtention d'une nette amélioration des caractéristiques de fonctionnement et de la qualité de l'émission lumineuse d'un tube luminescent dans lequel la cathode émettrice d'électrons est munie d'un revêtement de nanotubes de carbone obtenu par le procédé selon l'invention.

Plus précisément, l'emploi d'un tel revêtement permet une diminution importante de la tension de fonctionnement du tube tout en assurant une plus grande homogénéité et une densité supérieure de l'émission d'électrons par la cathode, dont il résulte également une meilleure homogénéité de l'émission lumineuse par la couche de matière luminescente.

On va maintenant donner des exemples, non limitatifs, illustrant la mise en oeuvre du procédé:

### Exemple 1:

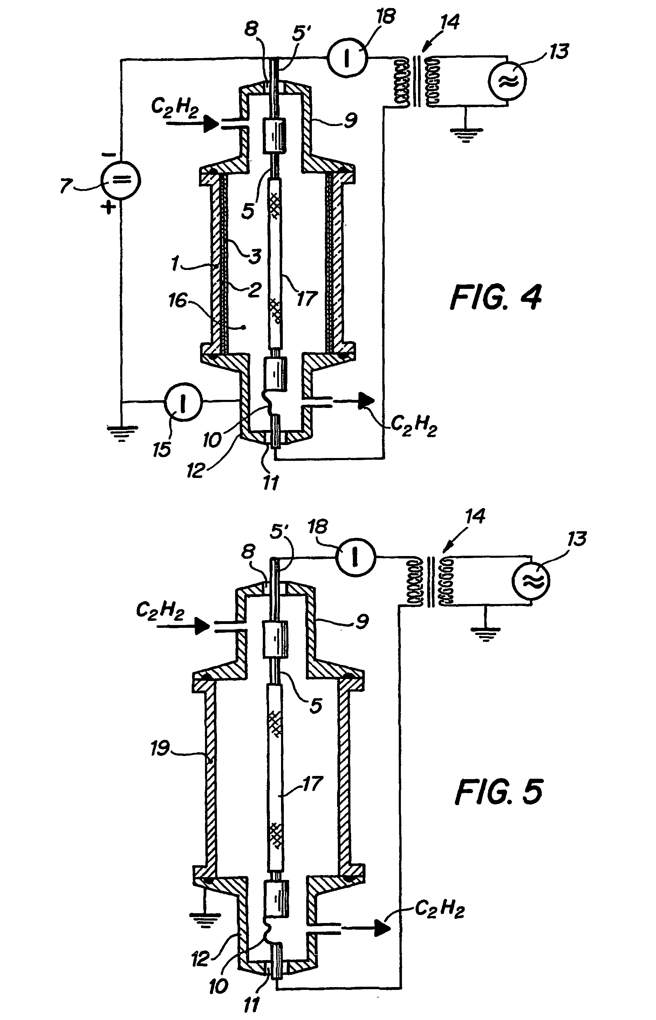

On utilise le dispositif, représenté à la Fig. 4, comprenant un tube cylindrique 1, en verre, ayant un diamètre de 42 mm et une épaisseur de paroi de 3 mm disposé verticalement et dont les extrémités supérieure et intérieure sont, respectivement, fermées par un flasque à vide 9 et un flasque à vide 12, en constituant ainsi une enceinte à vide 16.

Un fil de "Kanthal" 5 de 0,3 mm de diamètre, constituant le substrat destiné à être recouvert par un revêtement de nanotubes de carbone, est monté au centre du tube 1 parallèlement à l'axe de celui-ci. L'extrémité supérieure 5' du fil 5 est fixée sur un premier passage électrique étanche 8 traversant la paroi d'extrémité du flasque à vide 9, et l'extrémité inférieur du fil 5 est connectée avec une tresse souple en cuivre 10, reliée à un deuxième passage électrique étanche 11 traversant la paroi d'extrémité du flasque à vide 12. Préalablement au montage du fil 5 dans le tube 1, on nettoie sa surface à l'acétone , puis au méthanol et enfin à l'éthanol et on le chauffe à 1000°C, sous atmosphère d'air, dans un four, pendant 12 heures, de façon à former une couche protectrice d'oxyde sur la surface du fil.

On laisse ensuite le fil 5 refroidir à la température ambiante et on le trempe pendant 3 secondes dans une solution de nitrate de fer Fe(NO₃)₃.9H₂O, dans l'éthanol ayant une concentration de 50mM par litre, puis on retire le fil de cette solution et on le sèche sous un courant d'azote. Cette opération permet de déposer sur la surface du fil une couche de nitrate de fer ayant un effet catalytique sur la décomposition thermique de composés carbonés en vue de la formation de nanotubes de carbone sur la surface du fil. Comme dans le cas du tube luminescent représenté à la Fig. 1, la paroi intérieure du tube 1 est revêtue d'un première couche 2 transparente d'oxyde d'indium et d'étain elle-même recoùverte d'une deuxième couche 3 de matière électroluminescente.

Une source 13 de courant électrique alternatif, reliée au circuit primaire d'un transformateur 14, dont une borne du circuit secondaire est connectée au passage électrique 8 et l'autre au passage électrique 11 permet de chauffer le fil 5 par effet Joule. Un ampèremètre 18 permet de mesurer l'intensité du courant de chauffage du fil 5.

Une source 7 de courant continu à haute tension est, comme dans le cas du tube luminescent de la Fig. 1, connectée entre le fil 5 et la couche 3 de matière électroluminescente recouvrant la paroi intérieure du tube 1. Plus précisément, la borne négative de la source 7 est directement raccordée au passage électrique 8 et sa borne positive est raccordée au flasque 12 par l'intermédiaire d'un ampèremètre 15 qui permet ainsi la mesure de l'intensité du courant d'émission de champ pendant la formation des nanotubes de carbone sur la surface du fil 5.

Pour former un revêtement de nanotubes de carbone sur la surface du fil 5, tout en mesurant l'intensité du courant d'émission de champ au fur et à mesure de la croissance des nanotubes, on établit un vide de l'ordre de 10⁻⁶ mbar à l'intérieur du tube 1 et l'on applique ensuite une tension continue de 1,5 kV entre le fil 5 et la couche de matière électroluminescente 3. Après quoi on chauffe le fil 5 à 720°C, par effet Joule en faisant passer un courant alternatif d'une intensité d'environ 1 Ampère. Après une période de 5 minutes de chauffage à 720°C dans le vide de 10⁻⁶ mbar, on introduit dans le tube 1, un flux d'acétylène et on règle la pression partielle de l'acétylène à une valeur de 10⁻³ mbar. Après une période d'environ 50 secondes, on détecte le début d'un courant d'émission de champ, mesuré au moyen de l'ampèremètre 15, ainsi que l'apparition de taches lumineuses sur la couche de matière électroluminescente 3.

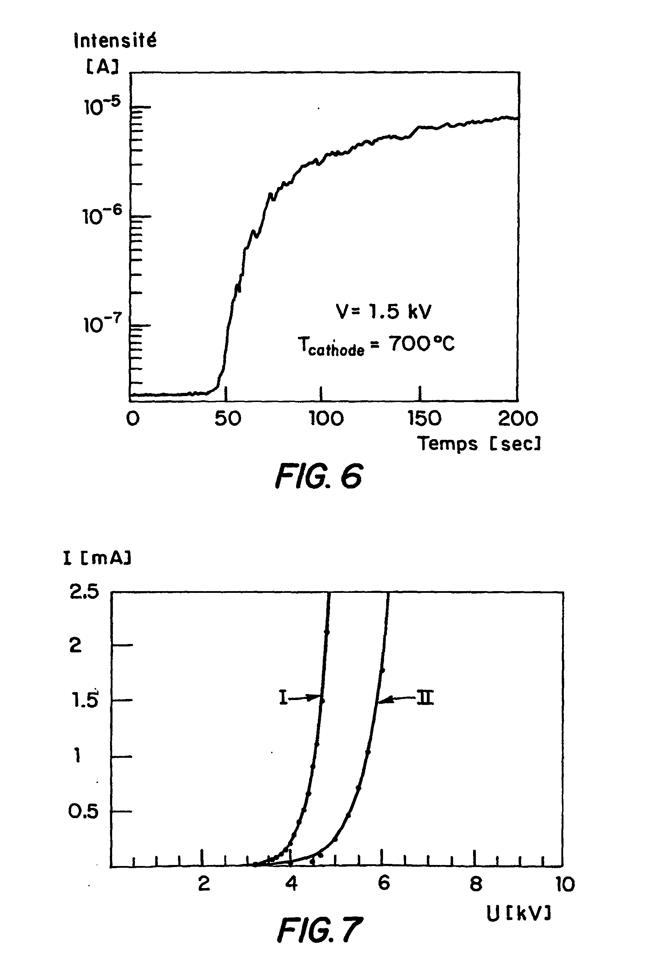

Ce courant d'émission de champ résulte de la formation d'un revêtement 17 de nanotubes de carbone sur la surface du fil 5 en constituant ainsi une cathode émettrice d'électrons. Le flux d'électrons émis par cette cathode provoque l'excitation de la couche de matière électroluminescente 3. Comme représenté à la Fig. 6, le courant d'émission de champ augmente rapidement en fonction du temps d'exposition du fil 5 à l'atmosphère d'acétylène. On voit que l'intensité du courant d'émission de champ atteint une valeur de palier de l'ordre de 10⁻⁵ Ampère au bout de 150 à 200 secondes, environ.

Parallèlement à cette augmentation d'intensité du courant d'émission de champ, qui traduit l'évolution de la croissance des nanotubes de carbone, les taches lumineuses augmentent en nombre jusqu'à occuper toute la surface de la couche 3. Ceci indique que la croissance du revêtement de nanotubes de carbone a atteint un degré d'avancement suffisant.

A ce moment, on arrête la croissance des nanotubes de carbone par interruption de l'alimentation en acétylène et l'on établit à nouveau un vide de l'ordre de 10⁻⁶ mbar à l'intérieur du tube 1.

On maintient encore la température du fil 5 à 720°C pendant environ 15 minutes après la fin de l'opération de formation du revêtement de nanotubes de carbone sur le fil 5 afin d'augmenter l'homogénéité de la structure de ce revêtement.

### Exemple 2:

On procède de manière similaire à celle décrite dans l'exemple 1, toujours en utilisant le dispositif représenté à la Fig. 4, mais, au lieu d'effectuer la mesure de l'intensité du courant d'émission de champ pendant la formation du revêtement de nanotubes de carbone sur la surface du fil 5, on procède à cette mesure au cours d'une phase opératoire distincte de la formation de ce revêtement.

Plus précisément, on forme le revêtement 17 de nanotubes de carbone au cours d'une phase opératoire effectuée sans application de tension continue entre le fil 5 et la couche de matière électroluminescente 3. Ceci permet de régler la pression partielle de l'acétylène à 200 mbar, au lieu de 10⁻³ mbar, et ainsi d'obtenir pour une durée de croissance donnée des nanotubes, un revêtement ayant une densité de tubes plus élevée que celle obtenue en procédant dans les conditions indiquées dans l'exemple 1.

On interrompt le processus de croissance des nanotubes de carbone, par évacuation de l'acétylène, au bout d'une période de formation du revêtement 17 d'une durée de 30 secondes, et l'on établit un vide de 10⁻⁶ mbar à l'intérieur de l'enceinte.

Après quoi, on applique une tension continue de 5 kV entre le fil 5 et la couche de matière électroluminescente 3 et on mesure l'intensité lumineuse émanant de la surface externe du tube 1.

Si nécessaire, on procède à une série d'opérations alternées de formation du revêtement de nanotubes de carbone et de mesure du courant d'émission de champ, par répétition des deux phases opératoires qui viennent d'être décrites, jusqu'à l'obtention d'une cathode émettrice d'électrons permettant d'obtenir une intensité de courant d'émission de champ et une densité d'émetteurs d'électrons suffisantes, correspondant par exemple, respectivement, à des valeurs de 1 mA et 5 émetteurs par centimètre carré de surface de la couche de matière électroluminescente 3.

### Exemple 3 :

On utilise le dispositif, représenté à la Fig. 5, similaire à celui de la Fig. 4 mais dans lequel le tube cylindrique 1 en verre est remplacé par un tube cylindrique 19 en aluminium, de mêmes diamètre et épaisseur que le tube 1, et dont la paroi intérieure ne comporte pas de couche de revêtement.

En outre, le dispositif de la Fig. 5 ne comprend pas le circuit d'alimentation en courant continu à haute tension.

Au moyen de ce dispositif, on forme un revêtement de nanotubes de carbone, sur la surface d'un fil de Kanthal, en procédant de manière analogue à celle décrite dans les exemples 1 et 2, sous une pression partielle d'acétylène de 200 mbar, tout en chauffant le fil 5 à 720°C par effet Joule, par passage d'un courant alternatif de 1 Ampère, pendant une période unique de croissance des nanotubes de carbone d'une durée de 30 minutes.

Comme on le voit à la Fig. 7, une cathode émettrice d'électrons par effet de champ, obtenue en formant un revêtement de nanotubes de carbone sur la surface d'un fil de Kanthal, par le procédé selon l'invention, de la manière décrite dans l'exemple 2, avec une durée totale de croissance de 3 minutes des nanotubes de carbone, permet d'obtenir une intensité de courant d'émission de champ, correspondant à la courbe I du diagramme de variation de l'intensité en fonction de la tension continue appliquée entre la cathode émettrice et l'anode, nettement plus élevée que celle obtenue dans le cas d'une cathode obtenue en formant le revêtement de nanotubes de carbone par le procédé selon l'art antérieur (en effectuant la décomposition d'une atmosphère composée de 80% d'azote et 20% d'acétylène en volume, sous pression de 1 bar, chauffée à 720°C dans un four au contact d'un fil de Kanthal dépourvu de moyen de chauffage), correspondant à la courbe II du diagramme de la Fig. 7.

## Revendications

1. Procédé pour former, sur la surface d'un substrat, un revêtement constitué de nanotubes de carbone, selon lequel on met cette surface en contact avec une atmosphère gazeuse, contenant au moins un composé de carbone, et susceptible de former une structure de nanotubes de carbone, par décomposition thermique au contact avec ledit substrat, et croissance de nanotubes de carbone à partir de la surface de celui-ci, et l'on maintient ladite surface à une température appropriée à cette décomposition thermique pendant un temps suffisant pour permettre un degré de croissance désiré des nanotubes de carbone, **caractérisé en ce que** ledit substrat est au moins partiellement constitué d'un matériau conducteur électrique, à l'exception d'un substrat poreux en carbone revêtu d'un catalyseur métallique, et que l'on soumet la partie de la surface du substrat, destinée à recevoir le revêtement de nanotubes de carbone, à un chauffage direct par effet Joule.

2. Procédé selon la revendication 1, **caractérisé par le fait que** le substrat est constitué d'un alliage de fer, aluminium et chrome.

3. Procédé selon la revendication 1 ou la revendication 2, **caractérisé par le fait que** le substrat est sous forme d'un fil.

4. Procédé selon la revendication 1, **caractérisée par le fait que** ledit composé de carbone est choisi parmi le monoxyde de carbone, les hydrocarbures et les mélanges d'au moins deux de ces composés.

5. Procédé selon la revendication 4, **caractérisé par le fait que** l'on utilise comme composé de carbone au moins un hydrocarbure choisi parmi l'acétylène, le méthane, l'éthylène, le butane et le benzène.

6. Procédé selon l'une des revendications 1 à 5, **caractérisé par le fait que** la surface du substrat est revêtue, préalablement à la formation du revêtement de nanotubes de carbone, d'au moins une couche de substance ayant un effet catalytique sur la décomposition dudit composé de carboné et/ou la croissance des nanotubes de carbone.

7. Procédé selon l'une des revendications 1 à 5, **caractérisé par le fait que** la matière constitutive du substrat a un effet catalytique sur la décomposition dudit composé carboné et/ou la croissance des nanotubes de carbone.

8. Procédé selon l'une des revendications 1 à 7, **caractérisé par le fait que** l'on soumet la surface du substrat, préalablement à la formation du revêtement de nanotubes de carbone, à un traitement destiné à améliorer l'adhésivité du revêtement sur le substrat.

9. Procédé selon la revendication 8, **caractérisé en ce que** ledit traitement consiste en un recuit sous vide ou sous un flux de gaz.

10. Procédé selon l'une des revendications 1 à 9, **caractérisé par le fait que** l'on maintient la surface du substrat à une température comprise entre 300°C et 1.500°C, pendant la décomposition thermique dudit composé de carbone.

11. Procédé selon l'une des revendications 1 à 10, **caractérisé par le fait que** l'on maintient ladite atmosphère gazeuse sous pression comprise entre 10⁻⁵ et 10.10³ millibars, pendant la décomposition thermique dudit composé de carbone.

12. Application du procédé selon la revendication 1 pour fabriquer une source émettrice d'électrons.

## Patentansprüche

1. Verfahren zur Bildung einer Beschichtung, die aus Kohlenstoff-Nanoröhren besteht, auf der Oberfläche eines Substrats, bei dem man diese Oberfläche mit einer Gasatmosphäre in Kontakt bringt, welche mindestens eine Kohlenstoffverbindung enthält und durch thermische Zersetzung in Kontakt mit dem Substrat und Wachstum der Kohlenstoff-Nanoröhren von dessen Oberfläche aus eine Kohlenstoff-Nanoröhrenstruktur bilden kann, und bei dem man diese Oberfläche während eines ausreichenden Zeitraums, der das gewünschte Maß an Wachstum der Kohleristoff-Nanoröhren zulässt, auf einer für diese thermische Zersetzung geeigneten Temperatur hält, **dadurch gekennzeichnet, dass** das Substrat zumindest teilweise aus einem elektrisch leitfähigen Material, ausgenommen ein poröses, mit einem metallischen Katalysator überzogenes Kohlenstoffsubstrat, besteht, und dass man den zur Aufnahme der Beschichtung aus Kohlenstoff-Nanoröhren bestimmten Teil der Substratoberfläche einer unmittelbaren Erhitzung durch elektrische Stromwärme unterwirft.

2. Verfahren nach Anspruch 1, **dadurch gekennzeichnet, dass** das Substrat aus einer Legierung von Eisen, Aluminium und Chrom besteht.

3. Verfahren nach Anspruch 1 oder 2, **dadurch gekennzeichnet, dass** das Substrat in Form eines Drahts vorliegt.

4. Verfahren nach Anspruch 1, **dadurch gekennzeichnet, dass** die Kohlenstoffverbindung aus Kohlenmonoxid, Kohlenwasserstoffen und Mischungen von mindestens zwei dieser Verbindungen ausgewählt ist.

5. Verfahren nach Anspruch 4, **dadurch gekennzeichnet, dass** man als Kohlenstoffverbindung mindestens einen aus Acetylen, Methan, Ethen, Butan und Benzol ausgewählten Kohlenwasserstoff verwendet.

6. Verfahren nach einem der Ansprüche 1 bis 5, **dadurch gekennzeichnet, dass** die Substratoberfläche vor der Bildung der Beschichtung aus Kohlenstoff-Nanoröhren mit mindestens einer Substanzschicht überzogen wird, die eine katalytische Wirkung für die Zersetzung der Kohlenstoffverbindung und/oder das Wachstum der Kohlenstoff-Nanoröhren hat.

7. Verfahren nach einem der Ansprüche 1 bis 5, **dadurch gekennzeichnet, dass** der das Substrat bildende Stoff eine katalytische Wirkung für die Zersetzung der Kohlenstoffverbindung und/oder das Wachstum der Kohlenstoff-Nanoröhren hat.

8. Verfahren nach einem der Ansprüche 1 bis 7, **dadurch gekennzeichnet, dass** man die Substratoberfläche vor der Bildung der Beschichtung aus Kohlenstoff-Nanoröhren einer Behandlung zur Verbesserung der Haftung der Beschichtung auf dem Substrat unterzieht.

9. Verfahren nach Anspruch 8, **dadurch gekennzeichnet, dass** die Behandlung in einem Glühen im Vakuum oder in einem GasStrom besteht.

10. Verfahren nach einem der Ansprüche 1 bis 9, **dadurch gekennzeichnet, dass** man die Substratoberfläche während der thermischen Zersetzung der Kohlenstoffverbindung auf einer Temperatur zwischen 300 und 1500 °C hält.

11. Verfahren nach einem der Ansprüche 1 bis 10, **dadurch gekennzeichnet, dass** man die Gasatmosphäre während der Zersetzung der Kohlenstoffverbindung in einem Druckbereich zwischen 10⁻⁵ und 10*10³ mbar hält.

12. Anwendung des Verfahrens nach Anspruch 1 zur Herstellung einer Elektronen-Emissionsquelle.

## Claims

1. Process for forming, on the surface of a substrate, a coating composed of carbon nanotubes, whereby this surface is placed into contact with a gaseous atmosphere, containing at least one carbon compound, and capable of forming of a carbon nanotube structure, by means of thermal decomposition upon contact with said substrate, and growth of carbon nanotubes from the surface of that substrate, and said surface is maintained at a temperature appropriate for said thermal decomposition for a sufficient time to allow for a desired extent of growth of carbon nanotubes, **characterized in that** said substrate is at least partially composed of a material that is an electric conductor, with the exception of a porous carbon substrate coated with a metallic catalyst, and that the part of the substrate surface destined to receive the carbon nanotube coating, is subjected to direct heating by the Joule effect.

2. Process according to claim 1, **characterized in that** the substrate is composed of an alloy of iron, aluminum and chrome.

3. Process according to claim 1 or claim 2, **characterized in that** the substrate is in the form of a wire.

4. Process according to claim 1, **characterized in that** said carbon compound is chosen from among carbon monoxide, the hydrocarbons and the mixtures of at least two of these compounds.

5. Process according to claim 4, **characterized in that**, as a carbon compound, at least.one hydrocarbon is used, chosen from among acetylene, methane, ethylene, butane and benzene.

6. Process according to one of claims 1 to 5, **characterized in that** the surface of the substrate is coated, prior to the formation of the carbon nanotube coating, with at least one layer of a substance having a catalytic effect on the decomposition of said carbon compound and/or the growth of the carbon nanotubes.

7. Process according to one of claims 1 to 5, **characterized in that** the material that constitutes the substrate has a catalytic effect on the decomposition of said carbon compound and/or the growth of the carbon nanotubes.

8. Process according to one of claims 1 to 7, **characterized in that** the surface of the substrate, prior to the formation of the carbon nanotube coating, is subjected to a treatment intended to enhance the adhesiveness of the coating to the substrate.

9. Process according to claim 8, **characterized in that** said treatment consists in annealing in a vacuum or under a gas stream.

10. Process according to one of claims 1 to 9, **characterized in that** the surface of the substrate is maintained at a temperature ranging between 300° C and 1,500° C, during the thermal decomposition of said carbon compound.

11. Process according to one of claims 1 to 10, **characterized in that** said gaseous atmosphere is maintained under pressure ranging between 10⁻⁵ and 10.10³ millibars, during the thermal decomposition of said carbon compound.

12. Application of the process according to claim 1 to manufacture an electron-emitting source.
